# EUROPEAN PATENT APPLICATION

(11) **EP 3 575 160 A1**
(43) Date of publication of application: **04.12.2019**
(21) Application number: 17893971.6
(22) Date of filing: 11.10.2017
(51) Int. Cl.: B60S 1/54, B60S 1/48

(54) **STEAM AIR WIPER SYSTEM**

(30) Priority: 30.01.2017 JP 2017013852; 27.04.2017 JP 2017087972
(71) Applicant: Kambe, Takao, Tokyo 164-0003 (JP)
(72) Inventor: Kambe, Takao, Tokyo 164-0003 (JP)
(74) Representative: Vossius & Partner Patentanwälte Rechtsanwälte mbB
(86) International application number: PCT/JP2017/036871
(87) International publication number: WO 2018/138974

(57) **Abstract**

Provided is a steam air wiper system that is used in particular for a front windshield of a four-wheel vehicle and demonstrates excellent practicality in terms of both function and cost. In the present invention, high-temperature and high-pressure water vapor V is jetted from jetting devices 15 toward a front windshield 25. This steam air wiper system is provided with: jetting devices that jet high-temperature and high-pressure water vapor in a conical and spiral shape toward an object from which rain and snow are to be removed; and an air supply means provided with an induction heating type heating device that has a multi-tube structure, and supplies the water vapor to the jetting devices.

## Description

### TECHNICAL FIELD

The present invention relates to a steam air wiper system, particularly for application to a window such as the windshield of a four-wheeled vehicle.

### BACKGROUND ART

Conventionally, as a wiper of this type, a wiper having a structure in which one to three arms are swingably supported and a rubber blade is attached to a tip end of each arm to contact a glass surface of a window (hereinafter, referred to as a "blade-type wiper") has been widely used. When the wiper is operated, the arm swings while the blade is in contact with the glass surface of the window, and the blade sweeps the glass surface of the window accompanying this, thereby removing rain or snow from the window.

However, with such a blade-type wiper, when the wiper is operated, unswept residue remains on the window, and the entire surface of the window cannot be swept. Furthermore, if the wiper is used for a long period of time, not only does the ability of the blade to remove rain and snow decrease with the deterioration of the blade, but also noise may occur each time the arm swings. Moreover, during driving on a rainy day, particularly when the arm is swung at high speed, the swinging of the blade obstructs the driver's view, which becomes a factor hindering the visibility of the driver.

Therefore, in order to resolve various inconveniences of the blade-type wiper, an air wiper has been disclosed which removes water droplets by blowing high-speed air (jet stream) from a nozzle onto a glass surface of a window (for example, see Patent Document 1).

Patent Document 1: Japanese Unexamined Patent Application, Publication No. H04-201766

### DISCLOSURE OF THE INVENTION

### Problems to be Solved by the Invention

However, with this air wiper, since the high-speed air is simply blown onto the glass surface of the window, it cannot cause rainwater to evaporate. In addition, an air compressor for generating the high-speed air is large and expensive, and accounts for a high ratio of 5 to 10% of the price of the vehicle body of a four-wheeled vehicle. As a result, this air wiper has a problem in that it is not practical in terms of both its function and price.

In view of such circumstances, it is an object of the present invention to provide a steam air wiper system which is superior in practicality in terms of both function and price.

### Means for Solving the Problems

A steam air wiper system according to an embodiment of the present invention is configured to include: a jetting device that causes, in a conical spiral shape, high-temperature and high-pressure water vapor to jet toward a rain and snow removal target; and an air supply means that includes a heating device of an induction heating system having a multiple pipe structure, and supplies water vapor to the jetting device.

The multiple pipe structure is a honeycomb structure.

The heating device of the multiple pipe structure heats water vapor to 150 to 300°C.

The steam air wiper system further includes a single-pipe heating device that evaporates water, in which water vapor that is heated by the single-pipe heating device is further heated by the heating device of the multiple pipe structure.

In the steam air wiper system, the heating device includes a control means that controls a temperature of water vapor depending on an amount of rain and snow.

The steam air wiper system includes a water collector that collects rain and snow or waste water of a vehicle, and a water storage tank that stores collected water.

The steam air wiper system includes a heat insulating tank that heats the water stored in the water storage tank to keep a temperature thereof within a predetermined temperature range, in which the water in the heat insulating tank is supplied to the heating device and is subjected to evaporation.

The jetting device includes two jetting ports, in which water vapor jets from one jetting port in a Z twist conical spiral shape, and water vapor jets from the other jetting port in an S twist conical spiral shape.

The jetting device includes a first jetting port having a jetting direction between jetting directions of the two jetting ports, and the first jetting port jets, above the rain and snow removal target, high-temperature and high-pressure water vapor to thereby suppress snow and rain from adhering to the rain and snow removal target.

The steam air wiper system includes a means for causing the jetting device to swing in a direction that crosses a jetting direction.

The steam air wiper system includes a means for interrupting jet in a case in which the jetting device is positioned at a predetermined retraction position.

### Effects of the Invention

According to the present invention, when rain and snow are removed from a rain and snow removal target such as a window, the rain and snow can be removed by the flow of high-temperature and high-pressure water vapor by swinging the jetting device in a state in which the high-temperature and high-pressure water vapor is jetted from the jetting device. As a result, it is possible to provide a steam air wiper which is superior in practicality in terms of both function and price.

### BRIEF DESCRIPTION OF THE DRAWINGS

FIG. 1 is a diagram illustrating the overall configuration of a steam air wiper system according to a first embodiment of the present invention;
FIG. 2A is a front view of a jetting device of the steam air wiper according to the first embodiment of the present invention;
FIG. 2B is a cross-sectional view taken along the line B-B of the jetting device illustrated in FIG. 2A;
FIG. 3 is a front view of a structure of a second jetting port and a third jetting port of the jetting device of the steam air wiper according to the first embodiment of the present invention;
FIG. 4 is a perspective view of a four-wheeled vehicle to which the steam air wiper according to the first embodiment of the present invention is mounted;
FIG. 5 is a side view of a main part of the four-wheeled vehicle illustrated in FIG. 4 (in the vicinity of the jetting device of the steam air wiper); and
FIG. 6 is a front view illustrating an operating state of the steam air wiper according to the first embodiment of the present invention.

### PREFERRED MODE FOR CARRYING OUT THE INVENTION

Hereinafter, a first embodiment of the present invention will be described with reference to the drawings.

### (First Embodiment)

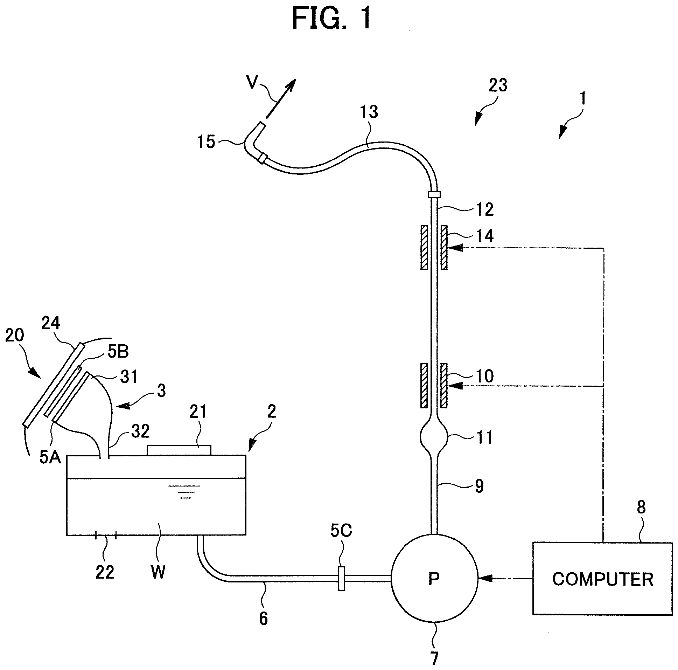

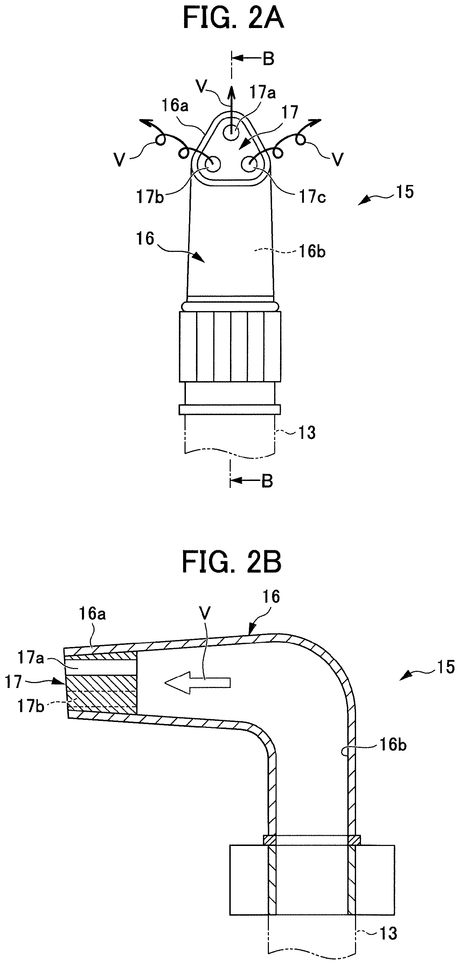

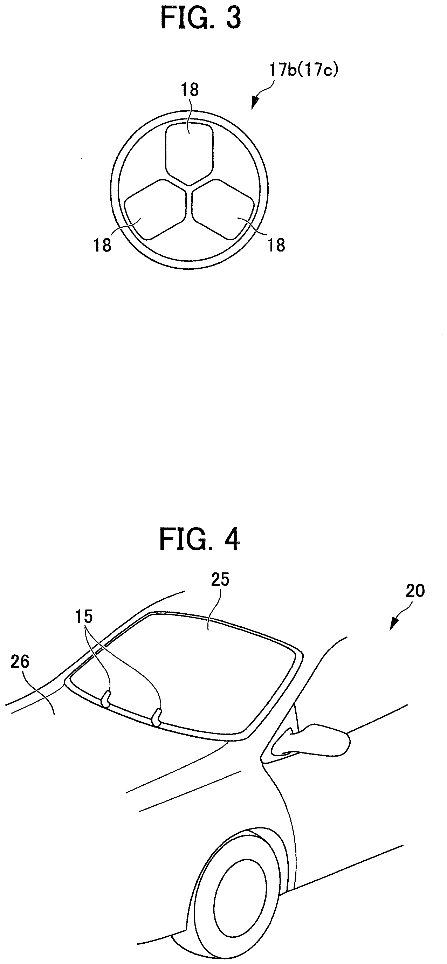

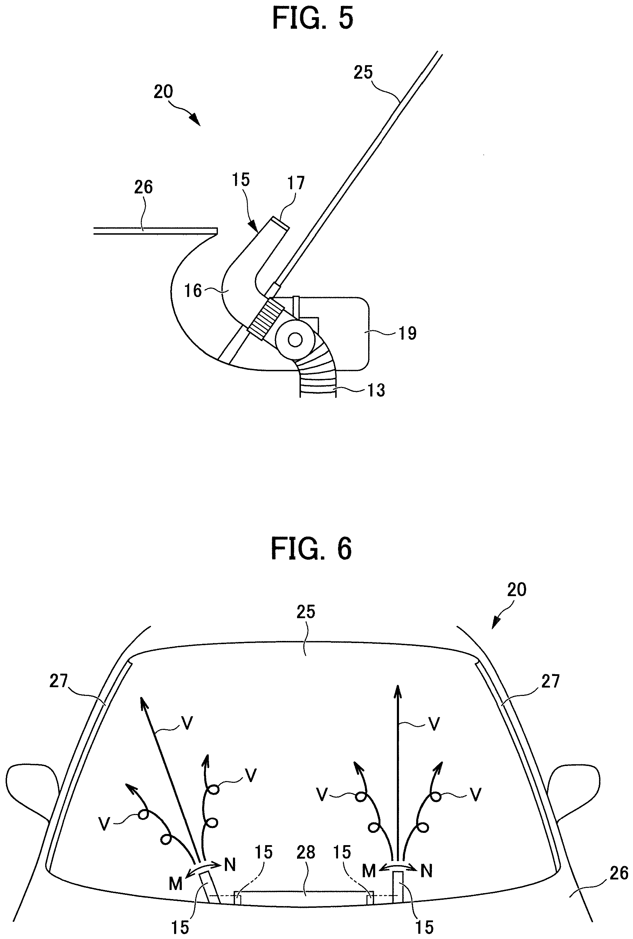

FIG. 1 is a diagram illustrating an overall configuration of a steam air wiper system according to a first embodiment. FIG. 2A is a front view of a jetting device of the steam air wiper according to the first embodiment. FIG. 2B is a cross-sectional view taken along line B-B of the jetting device illustrated in FIG. 2A. FIG. 3 is a front view of a structure of a second jetting port and a third jetting port of the jetting device of the steam air wiper according to the first embodiment. FIG. 4 is a perspective view of a four-wheeled vehicle to which the steam air wiper according to the first embodiment is mounted. FIG. 5 is a side view of a main part of the four-wheeled vehicle illustrated in FIG. 4 (in a vicinity of the jetting device of the steam air wiper). FIG. 6 is a front view illustrating an operating state of the steam air wiper according to the first embodiment.

As illustrated in FIG. 1, a steam air wiper 1 according to the first embodiment includes a water storage tank 2 having a predetermined capacity (e.g., 0.5 to 5 liters) for storing water W. A cap (lid) 21 is removably mounted on a top surface of the water storage tank 2, and a water discharge port 22 is furnished to a bottom surface in an openable/closable manner.

As illustrated in FIG. 1, a funnel-shaped (a shape of a flower of morning glory) water collector 3 is mounted on an upper side of the water storage tank 2. A double filter (a first filter 5A and a second filter 5B) is attached to an intake port 31 of the water collector 3. The first filter 5A is mainly a coarse filter for insect repellent. On the other hand, the second filter 5B is a heat ray filter which melts snow or hail and passes the snow or hail. In addition, a discharge port 32 of the water collector 3 communicates with the inside of the water storage tank 2.

Further, as illustrated in FIG. 1, a pump 7 is connected to the bottom surface of the water storage tank 2 via a water supply hose 6. A third filter 5C is provided in the middle of the water supply hoses 6. A computer 8 for ON/OFF controlling of the pump 7 is connected to the pump 7.

Further, as illustrated in FIG. 1, a thin water supply pipe 9 made of metal is connected to the pump 7. An air supply means 23 is connected to the water supply pipe 9 for vaporizing the water W supplied to the water supply pipe 9 from the water storage tank 2 through the water supply hose 6 and supplying water vapor V to a jetting device 15 described later. The air supply means 23 includes a first heating device 10, a heat insulating tank 11, an air supply pipe 12, a coupling cord 13, and a second heating device 14.

Here, the first heating device 10 of an induction heating system is provided in the vicinity of the upper end of the water supply pipe 9. As for the first heating device 10, for example, a cylindrical single pipe type heating device can be employed. The structure is not limited to a cylindrical shape, and may be a single pipe structure having a polygonal cross-section such as a quadrangular prism. The heat insulating tank 11 for keeping the water W warm at, for example, 50 to 90°C or 60 to 80°C is connected consecutively to the fore stage of the first heating device 10. The heat insulating tank 11 may not be provided. The thin air supply pipe 12 made of metal is connected consecutively to the upper side (rear stage) of the first heating device 10. The air supply pipe 12 is provided with the second heating device 14 of an induction heating system. As for the second heating device 14, for example, a honeycomb type multi-pipe type heating device can be adopted. Multiple pipes each having a honeycomb shape (a structure in which regular hexagonal prisms are arranged without gaps) are used to increase the heating surface area, whereby it is possible to heat water vapor heated by a single-pipe heating device to a high temperature at a higher speed. In addition, it may not be a multiple pipe structure in a honeycomb shape in cross section, and may be a multiple pipe structure in a polygonal shape such as a triangle or a quadrangle, a cylindrical shape, or a combination thereof in cross section.

Further, a pair of left and right jetting devices 15 are connected in parallel to the air supply pipe 12 via a flexible branch-type coupling cord 13 (refer to FIG. 4). It should be noted that, in FIG. 1, only one of a pair of the left and right jetting devices 15 is illustrated. The jetting devices 15 are configured to be independently driven by a separate servo motor 19 (refer to FIG. 5) on the basis of commands from the computer 8.

The heating energy of the first heating device 10 and the second heating device 14 is controlled by the computer 8 depending on the amount of rain and snow. As the amount of rain and snow increases, the heating temperatures of the first heating device 10 and the second heating device 14 are increased. For example, the water W is vaporized into 110 to 160°C water vapor by the first heating device 10, and the water vapor is rapidly heated to 150 to 300°C water vapor by the second heating device 14, and is supplied to the jetting device with low fluid resistance. Further, only one of the first heating device 10 or the second heating device 14 may be controlled in terms of its heating energy depending on the amount of rain and snow. The heating temperature or the heating range may be switched manually.

As illustrated in FIGS. 2A and 2B, each of the jetting devices 15 has a substantially L-shaped pipe-shaped cylindrical body 16. A ventilation passage 16b is formed inside the cylindrical body 16. A nozzle 17 having a substantially triangular prism shape is fitted into an exhaust port 16a of the cylindrical body 16. The nozzle 17 has three jetting ports (a first jetting port 17a, a second jetting port 17b, and a third jetting port 17c) formed in parallel with each other in such a manner as to be located at three vertices of an equilateral triangle. Although an example of the three jetting ports is described here, the first jetting port may be omitted, and a plurality of second jetting ports 17b and a plurality of third jetting ports 17c may be provided.

Here, as illustrated in FIG. 2A, the first jetting port 17a is formed at the upper portion of the nozzle 17. On the other hand, each of the second jetting port 17b and the third jetting port 17c is formed at the lower portion of the nozzle 17, and as illustrated in FIG. 3, three rectifying fins 18 are attached inside each of the second jetting port 17b and the third jetting port 17c in such a manner as to be slightly inclined with respect to the jetting direction of the water vapor V (direction perpendicular to the plane of the page of FIG. 3) in such an arrangement as to be positioned at intervals of equal angles (120 degrees) on the circumference. However, the rectifying fin 18 of the second jetting port 17b and the rectifying fin 18 of the third jetting port 17c are inclined in opposite directions to each other. It should be noted that such a rectifying fin is not provided inside the first jetting port 17a.

When the steam air wiper 1 is mounted to the four-wheeled vehicle 20, as illustrated in FIG. 1, the intake port 31 of the water collector 3 is arranged to be inclined obliquely upward along the inside of the inclined front grill 24 of the four-wheeled vehicle 20. Further, as illustrated in FIGS. 5 and 6, a pair of the left and right jetting devices 15 are attached in the gap between a windshield 25 and a hood 26 at approximately trisected points on the lower side of the windshield 25 so as to be swingable (swinging motion) in an arc shape in the directions of arrows M and N by a predetermined angle (for example, 120 to 130 degrees). Further, a water vapor recovery pipe 28 having a substantially T-shaped pipe shape is installed at a substantially middle portion of the lower side of the windshield 25 (i.e., at an intermediate portion between the pair of the left and right jetting devices 15). The water vapor recovery pipe 28 is open toward the lower side of the vehicle body (lower side of a driver's seat) of the four-wheeled vehicle 20.

In addition, as illustrated in FIG. 6, a pair of left and right guide members 27 having a U shape in cross section are attached to two left and right sides of the windshield 25 (i.e., portions each in contact with a corresponding one of two so-called A-pillars) on the four-wheeled vehicle 20.

The steam air wiper 1 has the above-described configuration. Therefore, when rain or snow falls on the four-wheeled vehicle 20, the rain or snow is supplied from the front grill 24 to the water storage tank 2 through the water collector 3. At this time, the first filter 5A attached to the intake port 31 of the water collector 3 makes it possible to prevent insects from entering. In addition, the second filter 5B attached to the intake port 31 of the water collector 3 makes it possible to melt snow or hail and convert the snow or hail into water W. As a result, the clean water W can be stored in the water storage tank 2. In addition, the intake port 31 of the water collector 3 is inclined obliquely upward. Therefore, the water W can be accumulated in the water storage tank 2 through the water collector 3 not only during the driving of the four-wheeled vehicle 20, but also while the vehicle is stopped. The water collector 3 may be configured to collect water discharged from the vehicle, such as, for example, waste water of a hydrogen fuel cell.

When it rains or snows while the four-wheeled vehicle 20 is running, the driver operates the steam air wiper 1. In response to this, the computer 8 turns on the pump 7. Then, the ambient temperature water W stored in the water storage tank 2 is supplied to the water supply pipe 9 through the water supply hose 6. At this time, impurities contained in the water W are removed by the third filter 5C provided in the middle of the water supply hoses 6.

Thereafter, the resulting water W is held in the heat insulating tank 11. The water W is rapidly heated by the first heating device 10 as the water W rises in the water supply pipe 9, and is vaporized at, for example, about 110°C to become high-temperature and high-pressure water vapor V. The heating temperature is controlled to vary depending on the amount of rain and snow, for example, in the range of 110 to 140°C, 120 to 150°C, or 130 to 160°C. The temperature may be controlled in the range of 110 to 160°C. At this time, the water W expands by about 3,000 times by evaporation. It should be noted that a temperature sensor (not illustrated) for detecting the temperature of water W passing through the inside of the water supply pipe 9 is mounted therein, and the computer 8 is configured to provide feedback control of the temperature of the water W by increasing or decreasing the electric current flowing to the first heating device 10 on the basis of the output of the temperature sensor.

The water vapor V is supplied from the first heating device 10 to the air supply pipe 12. At this time, the water vapor V is rapidly heated by the second heating device 14 to raise the temperature to, for example, about 230°C, and becomes higher in temperature and pressure. The heating temperature is controlled to vary depending on the amount of rain and snow, for example, in the range of 150 to 230°C, 170 to 250°C, or 190 to 300°C. The temperature may be controlled in the range of 150 to 300°C. The fluid resistance of the gas is very small, and the gas is supplied instantaneously to the jetting device. Further, the high-temperature and high-pressure water vapor V is supplied to the pair of left and right jetting devices 15 through the coupling cord 13, and is jetted from three jetting ports (the first jetting port 17a, the second jetting port 17b, and the third jetting port 17c) of each jetting device 15 toward the windshield 25 as the rain and snow removal target. It should be noted that a temperature sensor (not illustrated) for detecting the temperature of the water vapor V passing through the inside of the air supply pipe 12 is mounted, and the computer 8 is configured to provide feedback control of the temperature of the water vapor V by increasing or decreasing the electric current flowing to the second heating device 14 on the basis of the output of the temperature sensor.

At this time, as illustrated in FIGS. 2A and 6, the high-temperature and high-pressure water vapor V is linearly jetted above the windshield 25 from the first jetting port 17a. In addition, the high-temperature and high-pressure water vapor V is jetted from the second jetting port 17b in a Z twist (clockwise) conical spiral shape, and the high-temperature and high-pressure water vapor V is jetted from the third jetting port 17c in an S twist (counterclockwise, that is, in the opposite direction to the second jetting port 17b) conical spiral shape. Here, conical spiral shape indicates a spiral shape in which the diameter increases as the jetting distance of the water vapor V increases.

Thus, by making the directions of the spiral jet flows jetted from the two jetting ports opposite, the two jet flows operate together like gears so that the two gears mesh and rotate smoothly in opposite directions, thereby removing rain and snow. When the water vapor V is jetted from the second jetting port 17b in the s twist (counterclockwise) conical spiral shape and also jetted from the third jetting port 17c in the z twist (clockwise) conical spiral shape, the force of blowing rain and snow to the left and right increases.

In addition, the computer 8 drives each of the servo motors 19 at the same timing (or at timings with a small interval being provided) at which the high-temperature and high-pressure water vapor V is jetted from the pair of the left and right jetting devices 15, and swings the jetting devices 15 in the directions of the arrows M and N. At this time, the computer 8 appropriately adjusts the swing angle of each of the jetting devices 15 (i.e., the jetting direction of the water vapor V), so that the water vapor V jetted from the second jetting port 17b and the water vapor V jetted from the third jetting port 17c do not interfere with each other.

Then, as illustrated in FIG. 6, these jetting devices 15 are swung in the directions of the arrows M and N in a state in which the high-temperature and high-pressure water vapor V is jetted from the pair of the left and right jetting devices 15 toward the windshield 25. This makes it possible to remove the rain and snow on the windshield 25 by the flow of the high-temperature and high-pressure water vapor V. Therefore, it is possible not only to remove the rain and snow by the evaporation with the high-temperature and high-pressure water vapor V, but also to ensure the clear visibility as in the case of clear weather by dissolving oil and removing the oil film without jetting a washer liquid to the windshield 25. As described above, in the steam air wiper 1, in a case of removing the rain and snow on the windshield 25, the rain and snow can be evaporated, unlike the conventional air wiper (for example, see Patent Document 1). In addition, this eliminates the need to provide an expensive air compressor for generating high-speed air, which allows the steam air wiper 1 to be manufactured inexpensively. As a result, it is possible to provide the steam air wiper 1 which is superior in practicality in terms of both function and price.

In addition, when the high-temperature and high-pressure water vapor V is jetted from each of the jetting devices 15, firstly, the rain and snow are suppressed from adhering to the glass surface of the windshield 25 by the water vapor V jetted above the windshield 25 from the first jetting port 17a formed at the upper portion of the nozzle 17. Next, the rain and snow adhering to the glass surface of the windshield 25 are removed at high temperature and high pressure by the water vapor V jetted from the second jetting port 17b and the third jetting port 17c formed in the lower portion of the nozzle 17. This two-step operation enables rapid and efficient removal of rain and snow.

It should be noted that, since the coupling cord 13 which connects the air supply pipe 12 with the pair of the left and right jetting devices 15 has flexibility, it is possible for the jetting devices 15 to swing smoothly over a long period of time.

Further, with the steam air wiper 1, unlike the conventional blade-type wiper, it is possible to sweep the entire surface of the windshield 25, and it is also possible to avoid deterioration of the removing ability and generation of noise. Moreover, it is also possible to prevent the occurrence of a situation in which the driver's view is obstructed while driving in rainy weather due to the swinging of the blade. In addition, since the steam air wiper 1 is of non-contact type, it is more durable than a blade-type wiper of contact type.

Further, since the water vapor V jetted from the second jetting port 17b and the water vapor V jetted from the third jetting port 17c do not interfere with each other, it is possible to continue the jet while maintaining the power of the water vapor V. As a result, even when driving through heavy rain or heavy snow, it is still possible to secure the driver's view by blowing the rain or snow off of the windshield 25.

Further, since the water vapor V jetted from the second jetting port 17b and the third jetting port 17c has a conical spiral shape, even if the glass surface of the windshield 25 is a complicated curved surface, it is possible to sweep the whole surface.

In addition, since the pair of the left and right guide members 27 are attached to the left and right two sides of the windshield 25 on the four-wheeled vehicle 20, it is possible to prevent, in advance, the occurrence of a situation in which the rain and snow removed by the steam air wiper 1 are scattered to the left and right of the four-wheeled vehicle 20.

When the rain and snow that had been falling up until then stops falling down, the driver stops the operation of the steam air wiper 1. In response to this, the computer 8 turns off the pump 7. Then, the supply of the water W from the water storage tank 2 to the water supply pipe 9 is stopped. Accompanying this, the jet of the water vapor V from the pair of the left and right jetting devices 15 stops shortly.

In addition, at the same time as turning off the pump 7, the computer 8 appropriately swings the pair of the left and right jetting devices 15 and positions them at a predetermined retracted position as illustrated by an imaginary line in FIG. 6. Then, since these jetting devices 15 communicate with the water vapor recovery pipe 28, the jet of the water vapor V from the three jetting ports of the jetting device 15 (i.e., the first jetting port 17a, the second jetting port 17b, and the third jetting port 17c) toward the windshield 25 is interrupted. Therefore, after that, even if the water vapor V is supplied from the first heating device 10 and/or the second heating device 14 to the jetting device 15 through the air supply pipe 12 due to a time delay with the turning off of the pump 7, the water vapor V is guided to the lower part of the vehicle body of the four-wheeled vehicle 20 through the water vapor recovery pipe 28 and is safely discharged. Therefore, even when a vehicle, a bicycle, or pedestrian passes by the four-wheeled vehicle 20, it is possible to avoid the inconvenience of applying the water vapor V to the vehicle or the like.

It should be noted that, when not in use, the pair of the left and right jetting devices 15 are positioned at predetermined retracted positions and stored in the water vapor recovery pipe 28, as illustrated by an imaginary line in FIG. 6. This makes it possible to prevent dust from entering the cylindrical body 16 from the nozzle 17 of the jetting device 15.

Further, when water scaling occurs in the water W in the water storage tank 2, the cap 21 is removed and the inside of the water storage tank 2 is cleaned, and then the water W in the water storage tank 2 is discharged by opening the water discharge port 22.

The primary use of the steam air wiper 1 is as described above. However, there are various other ways of using the steam air wiper 1 in addition to the primary use as a wiper, taking advantage of the high-temperature and high-pressure water vapor V jetted from the jetting device 15. For example, if the windshield 25 becomes cloudy while the four-wheeled vehicle 20 is traveling, the steam air wiper 1 is operated to warm the windshield 25 from the outside of the vehicle to remove the cloudiness. Therefore, as compared with a conventional defroster in which warm air is blown to the inside of the windshield 25, it is possible to quickly remove the fogging of the windshield 25 and secure safety.

In addition, even if the windshield 25 of the four-wheeled vehicle 20 is frozen in the cold morning, it is possible to evaporate and remove the frost on the windshield 25 in a short time by operating the steam air wiper 1.

Further, upon washing the four-wheeled vehicle 20, after connecting a flexible hose (not illustrated) to the water vapor recovery pipe 28, the pump 7 is turned on via the computer 8 in a state in which the pair of the left and right jetting devices 15 are positioned at predetermined retracted positions, as illustrated by an imaginary line in FIG. 6. Then, as described above, the water W in the water storage tank 2 is instantaneously converted into the high-temperature and high-pressure water vapor V, and the resulting water vapor V is jetted from the pair of the left and right jetting devices 15. Further, the water vapor V is discharged from the hose through the water vapor recovery pipe 28. Therefore, it is possible to easily wash the vehicle body of the four-wheeled vehicle 20 by using the water vapor V.

It should be noted that, upon washing the four-wheeled vehicle, the water vapor V may come into contact with a human body. However, since the temperature of the water vapor V is about 230°C at the time of passing through the air supply pipe 12, the temperature becomes lower than about 230°C at the time of being discharged from the hose connected to the water vapor recovery pipe 28. Therefore, even if the water vapor V comes into contact with the human body, the water vapor V is unlikely to burn the human body, so that the car can be washed with peace of mind.

### (Other Embodiments)

Although embodiments of the present invention have been described above, the present invention is not limited to the embodiments described above. Also, the effects described in the present embodiment are only the most preferable effects resulting from the present invention, and the effects according to the present invention are not limited to those described in the present embodiments.

For example, in the first embodiment described above, a case in which the water vapor V is jetted in a conical spiral shape by attaching the rectifying fins 18 to the inside of the second jetting port 17b and the third jetting port 17c of the jetting device 15 has been described; however, the mechanism for jetting the water vapor V in a conical spiral shape is not limited to this. For example, the water vapor V may be jetted in a conical spiral shape by rotatably fitting a cylindrical rotor inside the cylindrical body 16, forming a vent hole in the rotor, and jetting the water vapor V from the vent hole while the rotor is rotated by a motor. Alternatively, instead of the motor, the rotor may be rotated by using the flow (force) of the water vapor V.

Further, in the first embodiment described above, the steam air wiper 1 provided with the two jetting devices 15 has been described. However, the number of the jetting devices 15 is not particularly limited, and one or three or more jetting devices 15 may be provided depending on conditions such as the shape and size of the windshield 25 of the four-wheeled vehicle 20.

Further, in the first embodiment described above, the case in which the pair of the left and right jetting devices 15 are attached to the lower side of the windshield 25 when the steam air wiper 1 is mounted on the four-wheeled vehicle 20 has been described; however, for example, it is also possible to attach a conventional blade-type wiper to the middle of the jetting devices 15 and to use it in combination with the steam air wiper 1.

In addition, in the first embodiment described above, a case in which the water vapor V is produced by heating the water W of normal temperature stored in the water storage tank 2 has been described. However, in order to quickly deal with sudden rainfall while driving, the water W of normal temperature stored in the water storage tank 2 may be heated up to, for example, about 50 to 90°C, 60 to 80°C, 70 to 90°C (that is, a temperature range slightly lower than the temperature at which the water W evaporates), and a heat insulating tank (not illustrated) may be installed to keep the temperature within the temperature range, and the water (hot water) in the heat insulating tank may be heated to generate the water vapor V in a short time. The maintained temperature or the range thereof may also be controllable or switchable depending on the amount of rain and snow.

Further, in the first embodiment described above, the case in which the water W is stored in the water storage tank 2 while driving the four-wheeled vehicle 20 or the four-wheeled vehicle is stopped has been described; however, if an overflow mechanism (not illustrated) is added to the water storage tank 2, it is possible to prevent the occurrence of a situation in which the total weight of the four-wheeled vehicle 20 is unnecessarily increased due to the storage of the excess water W.

In addition, in the first embodiment described above, a case in which rain and snow are taken in and used in the water storage tank 2 has been described; however, the water storage tank 2 may be of a sealed type or an open type. In the case of using a sealed type water storage tank 2, it is possible to deal with a rupture of the water storage tank 2 due to freezing in cold districts or winter season by taking measures to keep the water storage tank 2 slightly warm by using a predetermined heat source. On the other hand, in a case of using an open-type water storage tank 2, the pressure in the water storage tank 2 can be relieved, so that it is not necessary to take such measures. If the four-wheeled vehicle 20 is a fuel cell vehicle, the discharged water can be effectively utilized and, therefore, it is not necessary to arrange the intake port 31 of the water collector 3 so as to be inclined obliquely upward in order to secure the amount of water in the water storage tank 2. As a result, it is possible to increase the degree of freedom in design of the steam air wiper 1.

Further, in the first embodiment described above, the first heating device 10 and the second heating device 14 are of induction heating type; however, other types may be used as long as the systems can rapidly heat the water W and the water vapor V.

In addition, in the first embodiment described above, a case in which the water vapor recovery pipe 28 is opened toward the lower side of the body of the four-wheeled vehicle 20 (lower side of the driver's seat) has been described; however, the water vapor recovery pipe 28 does not necessarily need to be opened toward the lower side of the driver's seat. For example, it may be open toward the road surface in front of the drive wheels of the four-wheeled vehicle 20. In this case, when the four-wheeled vehicle 20 is stacked on a snowy road in a cold district or the like, the four-wheeled vehicle 20 can be started to run without slipping the drive wheels by jetting the high-temperature and high-pressure water vapor V from the water vapor recovery pipe 28 toward the road surface in front of the drive wheels to melt the snow.

Further, in the first embodiment described above, a case in which the jetting device 15 is driven by the servo motor 19 has been described. However, it is of course also possible to drive the jetting device 15 by drive means other than the servo motor 19 (for example, gears, tie rods, linkages, etc.).

In addition, in the first embodiment described above, a case in which the pair of the left and right jetting devices 15 swing in an arc shape has been described. However, the swinging motion of the jetting device 15 is not limited to an arc-shaped motion (swinging motion), and may be, for example, a motion in a horizontal direction or a vertical direction so long as being a direction that crosses the jetting direction of the water vapor V.

Further, in the first embodiment described above, a case in which the present invention is applied to the windshield 25 of the four-wheeled vehicle 20 has been described. However, the present invention can also be applied to windows (rear window, side window, etc.) other than the windshield 25 of the four-wheeled vehicle 20, a windshield or a front window of a two-wheeled vehicle or a three-wheeled vehicle, or windows of railway cars (electric trains, trains, etc.), ships, aircraft, and other vehicles. Further, the present invention can be applied not only to such vehicles, but also to a target from which it is desired to remove rain and snow, that is, a configuration having a rain and snow removing target. Therefore, for example, it is possible to remove rain and snow by applying the present invention to a window glass, a roof, an outer wall, a glass deck for viewing, and the like of a building.

A steam air wiper system according to an embodiment of the present invention may include the following configurations.
(1) The steam air wiper system is configured so that, in a state in which high-temperature and high-pressure water vapor is jetted from a jetting device toward a rain and snow removal target, the jetting device is caused to swing to allow the flow of the water vapor to move along a surface of the rain and snow removal target in a direction that crosses the jetting direction, thereby blowing and removing the rain and snow from the rain and snow removal target by the water vapor.
(2) The jetting device includes two jetting ports, and water vapor is jetted from one jetting port in a Z twist conical spiral shape, and water vapor is jetted from the other jetting port in an S twist conical spiral shape.
(3) The jetting device may further include a first jetting port, and the first jetting port jets, above the rain and snow removal target, high-temperature and high-pressure water vapor to thereby suppress snow and rain from adhering to the rain and snow removal target.
(4) The steam air wiper system may include a water storage tank that stores water and an air supply means that evaporates the water stored in the water storage tank, and supplies water vapor to the jetting device.
(5) The air supply means heats the water vapor to be supplied to the jetting device to 200°C or more.
(6) The steam air wiper system may include a heat insulating tank that heats the water stored in the water storage tank to keep the temperature thereof within a predetermined temperature range, and the air supply means evaporates the water in the heat insulating tank to supply water vapor to the jetting device.
(7) The steam air wiper system may be configured to interrupt the jet of water vapor from the jetting device toward the rain and snow removal target in a case in which the jetting device is positioned at a predetermined retracted position.

### EXPLANATION OF REFERENCE NUMERALS

- 1: steam air wiper
- 2: water storage tank
- 10: first heating device
- 11: heat insulating tank
- 12: air supply pipe
- 13: coupling cord
- 14: second heating device
- 15: jetting device
- 17: nozzle
- 17a: first jetting port
- 17b: second jetting port
- 17c: third jetting port
- 23: air supply means
- 25: windshield (rain and snow removal target)
- 28: water vapor recovery pipe
- V: water vapor
- W: water

## Claims

1. A steam air wiper system comprising:
a jetting device that cause, in a conical spiral shape, high-temperature and high-pressure water vapor to jet toward a rain and snow removal target; and
an air supply means that includes a heating device of induction heating type having a multiple pipe structure, and supplies water vapor to the jetting device.

2. The steam air wiper system according to claim 1, wherein the multiple pipe structure includes a honeycomb structure.

3. The steam air wiper system according to claim 1 or 2, wherein the heating device of the multiple pipe structure heats water vapor to 150 to 300°C.

4. The steam air wiper system according to any one of claims 1 to 3, further comprising a single-pipe heating device that evaporates water,
wherein water vapor that was heated by the single-pipe heating device is further heated by the heating device of the multiple pipe structure.

5. The steam air wiper system according to any one of claims 1 to 4, wherein the heating device includes a control means that controls a temperature of water vapor depending on an amount of rain and snow.

6. The steam air wiper system according to any one of claims 1 to 5, comprising a water collector that collects rain and snow or waste water of a vehicle.

7. The steam air wiper system according to claim 6, comprising a water storage tank that stores collected water.

8. The steam air wiper system according to claim 7 comprising a heat insulating tank that heats the water stored in the water storage tank to keep a temperature thereof within a predetermined temperature range,
wherein the water in the heat insulating tank is supplied to the heating device and made to evaporate.

9. The steam air wiper system according to any one of claims 1 to 8, wherein the jetting device includes two jetting ports, and
wherein water vapor is jetted from one jetting port in a Z twist conical spiral shape, and water vapor is jetted from another jetting port in an S twist conical spiral shape.

10. The steam air wiper system according to claim 9, wherein the jetting device includes a first jetting port having a jetting direction between jetting directions of the two jetting ports, and
wherein the first jetting port jets, above the rain and snow removal target, high-temperature and high-pressure water vapor to suppress snow and rain from adhering to the rain and snow removal target.

11. The steam air wiper system according to any one of claims 1 to 10, further comprising a means for causing the jetting device to swing in a direction that crosses a jetting direction.

12. The steam air wiper system according to any one of claims 1 to 11, further comprising a means for interrupting jetting in a case in which the jetting device is positioned at a predetermined retracted position.
